# FASCICULE DE BREVET EUROPEEN

(11) **EP 2 501 536 B1**
(45) Date de publication et mention de la délivrance du brevet: **30.08.2017**
(21) Numéro de dépôt: 10793003.4
(22) Date de dépôt: 17.11.2010
(51) Int. Cl.: B29C 70/00, B32B 5/02

(54) **PANNEAU EN MATERIAU COMPOSITE**
PANEEL AUS VERBUNDSTOFFMATERIAL
COMPOSITE MATERIAL PANEL

(30) Priorité: 18.11.2009 FR 0905542
(43) Date de publication de la demande: 26.09.2012
(73) Titulaire: Daher Aerospace, 41400 Saint Julien De Chedon (FR)
(72) Inventeur: LEFRANCOIS, Romain, 94000 Créteil (FR); FILIPPI, Georges, F-33700 Merignac (FR); HOTTIN, Mathieu, F-37150 Civray De Touraine (FR); LEMOINE, François, F-44100 Nantes (FR)
(74) Mandataire: Ipside
(86) Numéro de dépôt international: PCT/FR2010/052440
(87) Numéro de publication internationale: WO 2011/061443

(56) Documents cités:
- WO-A1-2004/024424
- WO-A1-2008/003721
- DE-B3-102007 038 926

## Description

L'invention concerne un panneau en matériau composite comportant une peau en matière composite et des éléments renforçant la rigidité du panneau, dits raidisseurs.

De tels panneaux de corps plan ou courbe sont couramment utilisés dans le domaine de l'aéronautique, en particulier dans la fabrication de fuselages d'aéronef, car répondant de manière combinée à des exigences de rigidité et de gain de masse.

On entend par matière composite, un matériau de renforcement à base de fibres du type verre, carbone, aramide ou autre, se présentant sous forme de fils ou de nappes tissées ou non tissées, le matériau de renforcement étant imprégné de matière thermoplastique ou thermodurcissable.

Les raidisseurs sont des éléments intégrés ou rapportés sur l'une des faces de la peau du panneau. Ces raidisseurs peuvent s'étendre selon une seule direction du panneau, comme selon deux directions en se croisant.

Dans le type d'architecture à deux directions, des premiers raidisseurs s'étendant selon une première direction sont co-polymérisés avec la peau lors d'une opération de moulage, puis d'autres raidisseurs destinés à s'étendre selon la seconde direction sont fixés aux premiers raidisseurs. La fixation est généralement réalisée en formant des cavités dans les premiers raidisseurs, en agençant dans ces cavités les seconds raidisseurs et en les solidarisant au niveau de leurs croisements par des moyens de fixation appropriés du type moyens de clipsage.

Cependant, cette fabrication requiert des opérations de perçage, d'assemblage et nécessairement de contrôle de l'ensemble des fixations, nécessitant du temps et des moyens dans le procédé de mise en oeuvre, qu'il est toujours souhaitable de réduire en vue de gagner en coût de production.

En outre, les moyens de fixation, essentiellement métalliques, ajoutent de la masse aux panneaux, ce qui ne conduit pas à un allègement des fuselages et ne participe pas à une réduction de coût matière.

Enfin, les capacités de réalisation industrielle limitent la possibilité de réaliser à des coûts compétitifs, un croisement de ces raidisseurs autre qu'orthogonal.

L'invention a donc pour but de proposer un panneau composite avec des raidisseurs disposés dans au moins deux directions en parvenant à limiter, voire diminuer sa masse, et simplifier son procédé de fabrication, sans contrevenir à la rigidité mécanique de la structure.

Selon l'invention, le panneau en matériau composite comportant une peau en matériau composite présentant deux faces générales opposées, et des premiers raidisseurs s'étendant sur l'une des faces de la peau selon au moins une direction, par exemple selon une même direction pour l'ensemble de ces premiers raidisseurs, le panneau étant caractérisé en ce qu'il comporte des raidisseurs supplémentaires qui sont agencés sur la face de la peau opposée à celle portant les premiers raidisseurs, et qui s'étendent selon une direction distincte de celle des premiers raidisseurs.

Le panneau de l'invention fournit par ce renforcement sur ses deux faces opposées une structure tout aussi rigide que celle de l'art antérieur, en simplifiant sa fabrication car supprimant la réalisation des logements en creux dans les premiers raidisseurs et la nécessité des moyens de fixation.

De préférence, les premiers raidisseurs et les raidisseurs supplémentaires sont fabriqués simultanément par moulage respectivement sur les deux faces opposées de la peau.

Grâce à une fabrication par moulage, il est permis d'obtenir aisément des raidisseurs sur les deux faces opposées de la peau. On garantit par ailleurs une solidarisation robuste et pérenne de la peau et de ses raidisseurs, le panneau formant un corps monobloc.

Cette solution permet en outre de rigidifier le panneau sans ajout de pièces complémentaires d'une part, n'engendrant par conséquent aucun poids additionnel, et sans altération des raidisseurs d'autre part, qui gardent ainsi toute leur intégrité et leurs propriétés mécaniques.

Toutefois, il est envisageable de fabriquer la peau et les premiers raidisseurs par moulage, tandis que les raidisseurs supplémentaires sont rapportés par collage ou rivetage.

Le moulage du panneau et de l'ensemble des raidisseurs est en particulier réalisé par co-injection ou co-moulage. La co-injection consiste par une opération unique à réaliser la totalité des parties du panneau (peau et raidisseurs), en agençant dans un moule les fibres de renforcement et en injectant la matière plastique. Le co-moulage consiste à mouler chacune des parties du panneau indépendamment et assembler le tout par polymérisation dans un moule adaptée à la forme de l'ensemble du panneau.

Des coutures de liens fibreux obtenues lors de l'opération de fabrication par moulage du panneau peuvent être agencées au niveau des surfaces de solidarisation des raidisseurs avec la peau.

Bien que le panneau ainsi obtenu par moulage garantisse une solidarisation parfaite des raidisseurs avec la peau, il est possible d'ajouter des rivets qui traversent la peau et les raidisseurs au niveau de leur surface de solidarisation.

Selon une caractéristique, les premiers raidisseurs et les raidisseurs supplémentaires sont disposés entre eux selon une orientation angulaire, de préférence orthogonale. Les raidisseurs orientés dans des directions distinctes n'étant pas sur la même face, il est aisé de les disposer à moindre coût selon toute orientation.

Chaque raidisseur comprend une âme et au moins une semelle, le raidisseur étant associé à la peau sur toute ou la plus grande partie de sa longueur via son âme, et/ou sa ou ses semelles.

Avantageusement, les raidisseurs présentent de manière non limitative un profil de section en Ω, C, U, T, Z, I, L, ou J.

Les raidisseurs sont constitués d'un matériau composite identique au matériau composite de la peau, notamment en matière plastique du type époxy, phénolique, ou poly bismaléimide (BMI) ou autre, dans laquelle sont noyées des fibres longues ou continues, tissées ou non ,de renforcement du type fibres de verre, de carbone ou d'aramide.

Le panneau composite est destiné à être notamment utilisé dans des parois de bateaux, de trains, ou dans le domaine aéronautique, notamment dans le fuselage d'un avion et en particulier dans les zones des trains d'atterrissage et/ou du caisson central de voilure.

Le panneau de l'invention sera avantageusement utilisé dans la zone du train d'atterrissage d'un avion qui forme une cavité par rapport à la surface extérieure de l'avion et n'est donc pas soumise aux contraintes aérodynamiques. En effet, cette zone est tout à fait adaptée à recevoir un assemblage de panneaux de l'invention sans que les raidisseurs en saillie de la peau composite ne constituent un obstacle au flux d'air léchant la surface extérieure du fuselage, au dehors de la cavité.

L'invention a également trait à un procédé de fabrication d'un panneau en matériau composite comprenant une peau et des raidisseurs sur les deux faces opposées de la peau, caractérisé en ce qu'il comporte une étape de moulage assurant en sortie de moule une solidarisation totale de la peau avec les raidisseurs. Le moulage peut consister de la co-injection ou du co-moulage.

La présente invention est maintenant décrite à l'aide d'exemples uniquement illustratifs et nullement limitatifs de la portée de l'invention, et à partir des illustrations ci-jointes, dans lesquelles :
- La figure 1 représente une vue partielle en perspective d'un panneau selon l'invention;
- La figure 2 est une vue en coupe de la figure 1 selon une des grandes dimensions du panneau ;
- La figure 3 est une autre vue en coupe de la figure 1, selon l'autre plus grande dimension du panneau ;
- La figure 4 est une vue partielle en perspective d'une variante de réalisation d'un panneau de l'invention ;
- La figure 5 est une vue schématique partielle et en coupe de l'avant et de la partie médiane d'un avion montrant la zone du train d'atterrissage et du caisson central de voilure;
- La figure 6 est une vue agrandie de la zone du train d'atterrissage de la figure 5.

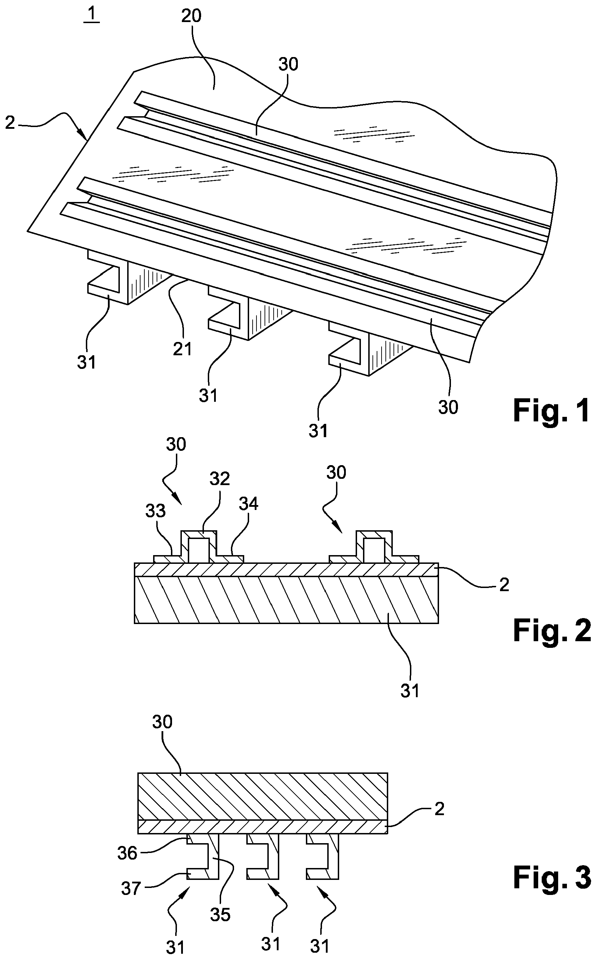

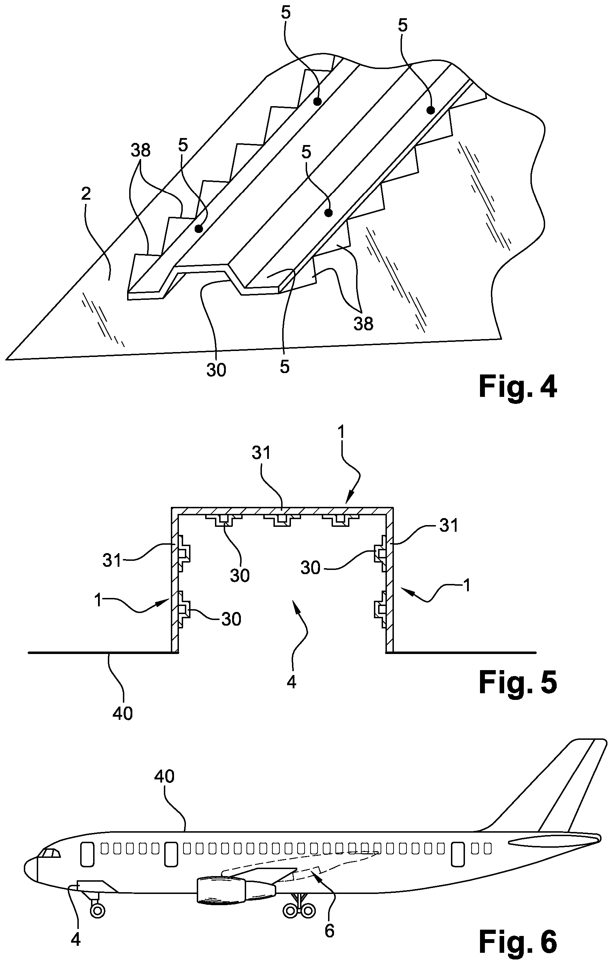

La figure 1 illustre un panneau composite 1 selon l'invention. L'association de plusieurs de ces panneaux permet par exemple de former une partie du fuselage d'un avion telle qu'illustrée schématiquement sur la figure 5, en particulier au niveau de la zone du train d'atterrissage 4 ou du caisson central 6 de voilure.

Le panneau composite 1 comporte une peau 2 en matière composite et une pluralité d'éléments structurants 30, 31 participant à la rigidité et à la résistance du panneau.

La peau composite 2 est constituée d'une matière plastique du type résine époxy, phénolique, ou BMI, dans laquelle sont noyées des fibres de renforcement telle que des fibres de verre, de carbone ou d'aramide du type Kevlar®. Les fibres se présentent sous forme de fibres longues ou courtes, tissées ou non tissées.

Cette peau présente une épaisseur faible en regard de ses autres dimensions que sont sa longueur et sa largeur.

La peau présente deux faces générales opposées 20 et 21 qui s'étendent chacune selon les plus grandes dimensions. Sa forme peut être plane ou courbe, voire même selon une double courbure, et peut comporter des dénivellations locales selon son épaisseur.

Les éléments structurants 30, 31 ou raidisseurs participent à la rigidité structurale du panneau et confortent la résistance du panneau en regard des contraintes subies transversalement aux faces générales 20 et 21 de la peau.

Selon l'invention, des premiers raidisseurs 30 sont agencés sur la première face générale 20 de la peau, tandis que des raidisseurs supplémentaires 31 sont disposés sur la seconde face et opposée 21 de la peau.

Les raidisseurs 30 et 31 sont de forme oblongue, leur plus grande dimension (longueur) s'étendant parallèlement ou angulairement à l'une des grandes dimensions de la peau 2.

En outre, les premiers raidisseurs 30 ne sont pas disposés parallèlement aux raidisseurs supplémentaires 31 mais présentent avec eux une orientation angulaire, par exemple orthogonale telle qu'illustrée sur la figure 1. Les premiers raidisseurs sont de préférence orientés selon un même direction mais pourraient présenter des orientations distinctes sans pour autant se couper entre eux.

L'orientation angulaire distincte entre les premiers raidisseurs et les seconds raidisseurs de la face opposée participe à la résistance mécanique souhaitée pour le panneau.

Les raidisseurs 30 et 31 sont creux et peuvent présenter de nombreuses formes, par exemple selon un profil en Ω, C, T, Z ou I...

Pourvus d'une âme et d'au moins une semelle, les raidisseurs sont associés à la peau via leur âme ou leur(s) semelle(s) sur toute ou la plus grande partie de leur longueur. L'allure d'un raidisseur selon sa longueur suit la forme générale de la peau, c'est-à-dire plane, courbe ou accidentée. En outre, le profil d'un raidisseur peut varier sur sa longueur. Les exemples de raidisseurs illustrés sur la figure 1 présentent un profil de section en Ω pour les premiers raidisseurs 30 de la face 20 de la peau et telle qu'illustrée sur la vue en coupe de la figure 2, tandis que les raidisseurs supplémentaires 31 de la face opposée 21 de la peau ont un profil de section en C (vue en coupe de la figure 3).

Les premiers raidisseurs 30 en 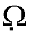 comportent chacun une âme 32 de section en U, et deux semelles 33 et 34 sensiblement perpendiculaires aux branches du U et s'étendant dans deux directions opposées, les raidisseurs étant solidaires de la face 20 de la peau 2 via les semelles 33 et 34.

Les raidisseurs supplémentaires 31 en C comportent chacun une âme 35 et deux semelles opposées 36 et 37 en regard l'une de l'autre, les raidisseurs étant solidaires de la face 21 de la peau 2 via l'une des semelles 36.

Les raidisseurs 30 et 31 sont constitués d'une matière composite, de préférence identique à celle de la peau 2. Ils sont selon l'invention rendus solidaires de la matrice par moulage.

Deux variantes de moulage sont envisagées, par co-injection ou par coumoulage.

La co-injection consiste à introduire les fibres, par exemple sous forme d'un tissu, dans un moule dans lequel toutes les formes sont dessinées (peau et raidisseurs), et d'injecter la matière plastique. En sortie de moule, la peau et les raidisseurs constitue un corps monobloc en une seule opération sur les deux faces opposées de la peau 2.

Le co-moulage consiste à fabriquer par moulage les pièces que sont la peau et les raidisseurs de manière indépendante, puis à introduire ces pièces dans un moule pour être polymérisées afin d'assurer leur assemblage. En sortie de moule, l'ensemble est unitaire.

Il est envisageable tel qu'illustré sur la figure 4, d'ajouter par ailleurs des liens fibreux au niveau des zones de liaison entre la peau et les raidisseurs pour constituer après moulage en quelque sorte des coutures 38 qui renforcent encore la solidarisation.

Les raidisseurs qui sont creux sont réalisés à partir de pièces dites noyaux, dont la forme extérieure permet de réaliser l'enveloppe des raidisseurs. Après moulage, les noyaux sont extraits pour définir la zone creuse des raidisseurs. Un noyau est par exemple constitué d'une vessie en matériau souple gonflable ou en un matériau apte à se dilater et se contracter en fonction des changements de température, en particulier lors et après polymérisation du matériau composite du panneau.

La figure 4 illustre une variante supplémentaire d'un panneau qui comporte des rivets 5 traversant la peau et les raidisseurs au niveau de leur surface de solidarisation. Ces rivets sont ajoutés après obtention du panneau par moulage.

La figure 6 illustre une vue en coupe schématique partielle d'un avion montrant la zone 4 du train d'atterrissage. Il s'agit d'une cavité agencée par rapport au-dessous 40 de l'avion. L'intérieur de la cavité n'étant pas soumis aux contraintes aérodynamiques, l'association d'une pluralité de panneaux de l'invention 1 est particulièrement adaptée pour constituer la paroi de cette cavité.

Ainsi, les raidisseurs 30 et 31 sont agencés de part et d'autre de la cavité assurant une rigidité à la paroi, les raidisseurs supplémentaires 31 en C étant par exemple du côté externe à la cavité et tournés vers l'intérieur de l'avion, tandis que les premiers raidisseurs 30 en 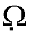 font saillie vers l'intérieur de la cavité n'engendrant aucune contrainte en terme d'aérodynamisme puisque n'étant pas en contact direct avec l'air extérieur.

## Revendications

1. Panneau (1) en matériau composite comportant une peau (2) en matériau composite présentant deux faces générales opposées (20, 21) et :
- une pluralité de premiers raidisseurs (30) **solidaires de l'une des faces (20) de la peau et** s'étendant **selon leur plus grande dimension** selon une direction ;
- **caractérisé en ce que** ledit panneau comporte **une pluralité de** raidisseurs supplémentaires (31) qui sont agencés sur **et solidaires** de l'autre face (21) de la peau, opposée à celle portant les premiers raidisseurs (30), lesquels raidisseurs supplémentaires s'étendent, **selon leur plus grande dimension,** selon une direction distincte de celles des premiers raidisseurs (30) ;
- **les raidisseurs (30, 31) étant constitués d'un matériau composite identique au matériau composite de la peau (2).**

2. Panneau selon revendication 1, **caractérisé en ce que** les premiers raidisseurs (30) et les raidisseurs (30) et les raidisseurs supplémentaires (31) sont disposés entre eux selon une orientation angulaire orthogonale.

3. Panneau selon les revendications 1 ou 2, **caractérisé en ce que** les raidisseurs (30, 31) sont constitués **d'une** matière plastique du type époxy, phénolique ou poly-bismaléimide (BMI), dans laquelle sont noyées des fibres longues ou continues, tissées ou non, de renforcement de type fibres de verre, de carbone ou d'aramide.

4. Panneau selon l'une des revendications précédents, **caractérisé en ce que** chaque raidisseur (30, 31) comprend une âme (32, 35) et au moins une semelle (33, 34, 36, 37) le raidisseur étant associé à la peau (2) sur toute ou la plus grande partie de sa longueur via son âme et/ou sa ou ses semelles.

5. Panneau selon l'une quelconque des revendications précédentes, **caractérisé en ce que** les raidisseurs (30, 31) présentent un profil de section en Ω, C, T, Z, I, L ou J.

6. Panneau selon l'une quelconque des revendications 1 à 5, **caractérisé en ce que** les premiers (30) raidisseurs et les raidisseurs (31) supplémentaires sont fabriqués simultanément par moulage sur les deux faces (20, 21) opposées de la peau (2).

7. Panneau selon l'une quelconque des revendications précédentes, **caractérisé en ce que** le panneau et l'ensemble des raidisseurs (30, 31) ont été moulés par co-injection ou par co-moulage.

8. Panneau selon l'une quelconque des revendications précédentes, **caractérisé en ce qu'il comporte** des coutures de liens fibreux (38) obtenues lors de l'opération de fabrication par moulage du panneau au niveau des surfaces des raidisseurs (30, 31) solidaires la peau (2).

9. Panneau selon **la revendication 6, caractérisé en ce qu'**il comporte des rivets (5) qui traversent la peau et les raidisseurs au niveau de leur surface de solidaire de ladite peau.

10. **Utilisation d'un** panneau selon l'une quelconque des revendications précédentes dans des parois de bateaux, de trais, ou dans le domaine aéronautique, notamment dans le fuselage d'un avion et en particulier dans les zones de trains d'atterrissage et/ou de caisson central de voilure.

## Patentansprüche

1. Paneel (1) aus Verbundstoffmaterial, umfassend eine Haut (2) aus Verbundstoffmaterial, die zwei sich gegenüberliegende allgemeine Seiten (20, 21) aufweist, und:
- mehrere erste Versteifungselemente (30), die fest mit einer der Seiten (20) der Haut verbunden sind und sich entlang ihrer größten Abmessung in eine Richtung erstrecken;
- **dadurch gekennzeichnet, dass** das Paneel mehrere zusätzliche Versteifungselemente (31) umfasst, die auf und fest verbunden mit der anderen Seite (21) der Haut, die der gegenüberliegt, welche die ersten Versteifungselemente (30) trägt, angeordnet sind, wobei sich die zusätzlichen Versteifungselemente entlang ihrer größten Abmessung in eine andere Richtung als die ersten Versteifungselemente (30) erstrecken;
- wobei die Versteifungselemente (30, 31) aus dem gleichen Verbundstoffmaterial wie die Haut (2) bestehen.

2. Paneel nach Anspruch 1, **dadurch gekennzeichnet, dass** die ersten Versteifungselemente (30) und die Versteifungselemente (30) und die zusätzlichen Versteifungselemente (31) in einer orthogonalen Winkelausrichtung zueinander angeordnet sind.

3. Paneel nach den Ansprüchen 1 oder 2, **dadurch gekennzeichnet, dass** die Versteifungselemente (30, 31) aus einem Kunststoffmaterial vom Typ Epoxid, Phenol oder Poly-Bismaleinimid (BMI) bestehen, in den lange oder endlose Verstärkungsfasern, gewebt oder nicht, vom Typ Glas-, Karbon- oder Aramidfasern eingebettet sind.

4. Paneel nach einem der vorhergehenden Ansprüche, **dadurch gekennzeichnet, dass** jedes Versteifungselement (30, 31) einen Steg (32, 35) und mindestens einen Flansch (33, 34, 36, 37) umfasst, wobei das Versteifungselement mit der Haut (2) über seine gesamte oder den größten Teil seiner Länge über seinen Steg und/oder seinen Flansch oder seine Flansche verbunden ist.

5. Paneel nach einem der vorhergehenden Ansprüche, **dadurch gekennzeichnet, dass** die Versteifungselemente (30, 31) ein Profil mit einem Querschnitt in Form eines W, C, T, Z, I, L oder J aufweisen.

6. Paneel nach einem der Ansprüche 1 bis 5, **dadurch gekennzeichnet, dass** die ersten Versteifungselemente (30) und die zusätzlichen Versteifungselemente (31) gleichzeitig durch Anformen an die beiden sich gegenüberliegenden Seiten (20, 21) der Haut (2) hergestellt werden.

7. Paneel nach einem der vorhergehenden Ansprüche, **dadurch gekennzeichnet, dass** das Paneel und sämtliche Versteifungselemente (30, 31) durch Mehrkomponenten-Spritzgießen oder Mehrkomponenten-Anformen geformt werden.

8. Paneel nach einem der vorhergehenden Ansprüche, **dadurch gekennzeichnet, dass** es faserige Verbindungsnähte (38) umfasst, die beim Herstellungsvorgang durch Anformen des Paneels an den Oberflächen der fest mit der Haut (2) verbundenen Versteifungselemente (30, 31) erhalten werden.

9. Paneel nach Anspruch 6, **dadurch gekennzeichnet, dass** es Nieten (5) umfasst, die die Haut und die Versteifungselemente an ihrer fest mit der Haut verbundenen Oberfläche durchdringen.

10. Verwendung eines Paneels nach einem der vorhergehenden Ansprüche in Wänden von Schiffen, von Zügen oder im Luftfahrtbereich, insbesondere im Rumpf eines Flugzeugs und insbesondere in den Bereichen von Fahrwerken und/oder des zentralen Kastens von Tragflächen.

## Claims

1. Composite material panel (1) having a skin (2) of composite material that has two opposite general faces (20, 21) and
- a plurality of first stiffeners (30) that are secured to one of the faces (20) of the skin and extend in one direction along their greatest dimension;
- **characterized in that** said panel has a plurality of additional stiffeners (31) which are arranged on and secured to the other face (21) of the skin, on the opposite side from the one bearing the first stiffeners (30), said additional stiffeners extending, along their greatest dimension, in a direction different from that of the first stiffeners (30);
- the stiffeners (30, 31) being made of a composite material identical to the composite material of the skin (2).

2. Panel according to Claim 1, **characterized in that** the first stiffeners (30) and the stiffeners (30) and the additional stiffeners (31) are disposed at an angular orientation orthogonal to one another.

3. Panel according to Claim 1 or 2, **characterized in that** the stiffeners (30, 31) are made of a plastics material of the epoxy, phenolic or poly(bismaleimide) (BMI) type, in which long or continuous, woven or nonwoven reinforcement fibres of the glass, carbon or aramid fibre type are embedded.

4. Panel according to one of the preceding claims, **characterized in that** each stiffener (30, 31) comprises a web (32, 35) and at least one flange (33, 34, 36, 37), the stiffener being joined to the skin (2) along all or the majority of its length via its web and/or its flange(s).

5. Panel according to any one of the preceding claims, **characterized in that** the stiffeners (30, 31) have a profile with a W-, C-, T-, Z-, I-, L- or J-shaped cross section.

6. Panel according to any one of Claims 1 to 5, **characterized in that** the first stiffeners (30) and the additional stiffeners (31) are manufactured simultaneously by being moulded on the two opposite faces (20, 21) of the skin (2).

7. Panel according to any one of the preceding claims, **characterized in that** the panel and the set of stiffeners (30, 31) have been moulded by co-injection moulding or by co-moulding.

8. Panel according to any one of the preceding claims, **characterized in that** it has seams of fibrous connections (38) obtained during the operation of manufacturing the panel by moulding at the surfaces of the stiffeners (30, 31) secured to the skin (2).

9. Panel according to Claim 6, **characterized in that** it has rivets (5) which pass through the skin and the stiffeners at their surface secured to said skin.

10. Use of a panel according to any one of the preceding claims in the walls of boats, trains, or in the aeronautical field, notably in the fuselage of an aircraft and in particular in the regions of the landing gear and/or the central wing box.
